(19) Europäisches Patentamt

European Patent Office

Office européen des brevets

(11) Veröffentlichungsnummer: **0 469 257 B1**

(12) **EUROPÄISCHE PATENTSCHRIFT**

(45) Veröffentlichungstag der Patentschrift: **11.01.95**

(21) Anmeldenummer: **91107996.0**

(22) Anmeldetag: **17.05.91**

(51) Int. Cl.⁶: **C01F 7/02**

(54) **Aluminiumhydroxid für die Einmischung in Kunststoff und Verfahren zu seiner Herstellung.**

(30) Priorität: **28.07.90 DE 4024044**

(43) Veröffentlichungstag der Anmeldung:
**05.02.92 Patentblatt 92/06**

(45) Bekanntmachung des Hinweises auf die
Patenterteilung:
**11.01.95 Patentblatt 95/02**

(84) Benannte Vertragsstaaten:
**BE ES FR GB IT LU NL**

(56) Entgegenhaltungen:
**EP-A- 0 011 667**
**EP-A- 0 276 430**
**EP-A- 0 305 745**
**EP-A- 0 407 595**
**GB-A- 2 010 855**

**PATENT ABSTRACTS OF JAPAN vol. 14, no.
43 (C-681)(3986) 26. Januar 1990**

(73) Patentinhaber: **VAW Aluminium AG
Georg-von-Boeselager-Strasse 25
D-53117 Bonn (DE)**

(72) Erfinder: **Trettenbach, Johann, Dr.
Hochweg 1
W-8414 Maxhütte-Haidhof (DE)**
Erfinder: **Braun, Dieter, Dr.
Am Alten Stadtweg 23
W-8412 Burglengenfeld (DE)**
Erfinder: **Simon, Gerolf
Eichendorffstrasse 5
W-8450 Amberg (DE)**
Erfinder: **Greber, Jörg Friedrich, Dr.
Zum Guten Hirten 8
W-8460 Schwandorf (DE)**

(74) Vertreter: **Müller-Wolff, Thomas
HARWARDT NEUMANN,
Patent- und Rechtsanwälte,
Postfach 14 55
D-53704 Siegburg (DE)**

**Beschreibung**

Die Erfindung betrifft ein Aluminiumhydroxid für die Einmischung in Kunststoffe vom Typ Duroplaste, ein Verfahren zur Herstellung des Aluminiumhydroxids durch Mahlung sowie einen flammgeschützten Kunststoff auf Basis von Duroplasten.

In der Kunststoffindustrie werden flammhemmende Aluminiumhydroxide mit möglichst hohen Füllgraden eingesetzt. Es war bisher nicht möglich, mit gemahlenem Hydroxid mit einer mittleren Korngröße von 10 - 15 $\mu$m Füllgrade von mehr als 160 Teilen Hydroxid auf 100 Teile Kunstharz zu erreichen.

Bei der Flammfestmachung von Fassadenplatten, elektrischen Bauteilen sowie faserverstärkten Verbundteilen für Automobilindustrie ist es ferner wichtig, daß das Harz bei möglichst hohen Füllgraden an Aluminiumhydroxid noch gut verarbeitbar ist. Dies wird erreicht durch eine möglichst niedrige Viskosität, die jedoch üblicherweise mit dem Füllgrad ansteigt.

Als weiteres wichtiges Kriterium muß die Oberfläche des Fertigteils zumindest an allen sichtbaren Flächen glatt sein. Auch diese Anforderung ist bei hohen Füllgraden an Aluminiumhydroxid schwer zu erfüllen.

Aufgabe der vorliegenden Erfindung ist es, ein Aluminiumhydroxid zur Flammfestmachung von Kunststoffen und ein Verfahren zu seiner Herstellung sowie einen flammgeschützten Kunststoff auf Basis von Duroplasten zu entwickeln, wobei das Aluminiumhydroxid mit einem Füllgrad von mehr als 160 Teilen Aluminiumhydroxid auf 100 Teile Kunstharz einmischbar und dabei eine günstige Viskosität aufweist sowie eine glatte Oberfläche an dem daraus hergestellten Fertigteil zeigt.

Die Aufgabe wird durch die in den Patentansprüchen angegebenen Merkmale gelöst. Es hat sich gezeigt, daß die Füllstoffe dann ein besonders gutes Viskositätsverhalten aufweisen, wenn sie sich einer Fullerkurve annähern. Die Fullerkurve ist definiert durch:

$$D = \sqrt{\frac{d}{d_{max}}} \cdot 100 \ (\%)$$

mit

D = Siebdurchgang (%)
d = Korngröße ($\mu$m)
$d_{max}$ = maximale Korngröße ($\mu$m).

Das erfindungsgemäße Aluminiumhydroxid läßt sich durch die in Tabelle 1 angegebenen Kornverteilungen näher beschreiben. Zum Vergleich wurden handelsübliche Produkte anderer Hersteller herangezogen und mit V1 bis 4 bezeichnet. Zur Verdeutlichung der Unterschiede der Kornverteilungen sind in Tabelle 1 die Parameter $d_{10}$, $d_{50}$ und $d_{90}$ sowie Breite B = $\sqrt{d_{90}} - \sqrt{d_{10}}$ mit den Werten nach Fuller verglichen. Die Fullerkurve beschreibt dabei den Zustand einer Kornverteilung, bei der das Lückenvolumen bei gegebenem Maximalkorn gegen 0 geht (s. Harders-Kienow, Feuerfestkunde, S. 78-82).

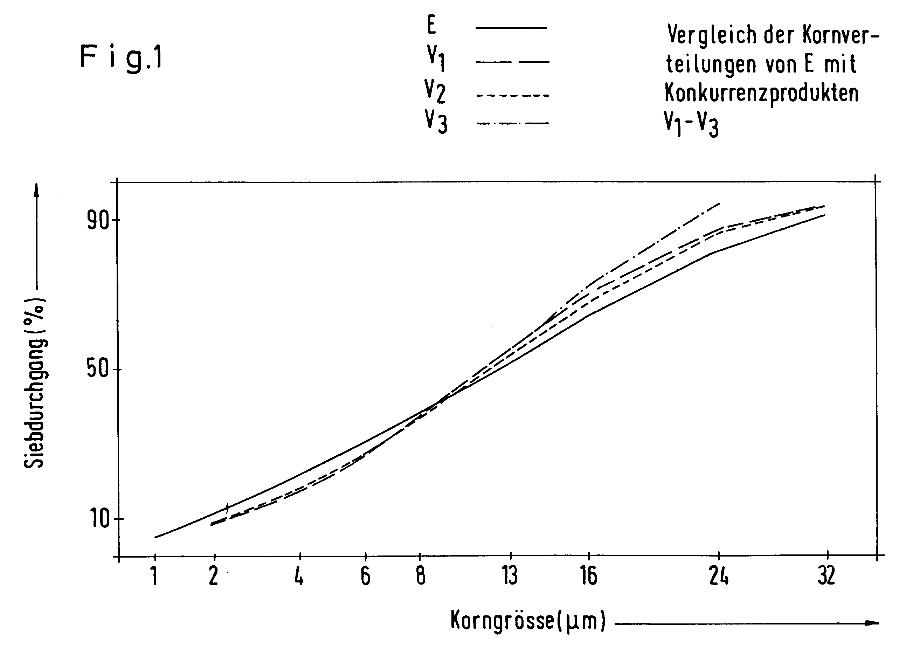

Bei den in Tabelle 1 aufgelisteten Werten wurde rechnerisch von einer mittleren Korngröße $d_{50}$ = 11 $\mu$m ausgegangen. Die Werte für $d_{10}$ und $d_{90}$ wurden graphisch nach dem Siebdurchgang ermittelt (s. Abb. 1). Aus Tabelle 1 geht hervor, daß die Kornverteilung des erfindungsgemäßen Produktes der idealen Fullerkurve in diesem Feinheitsbereich am nächsten kommt.

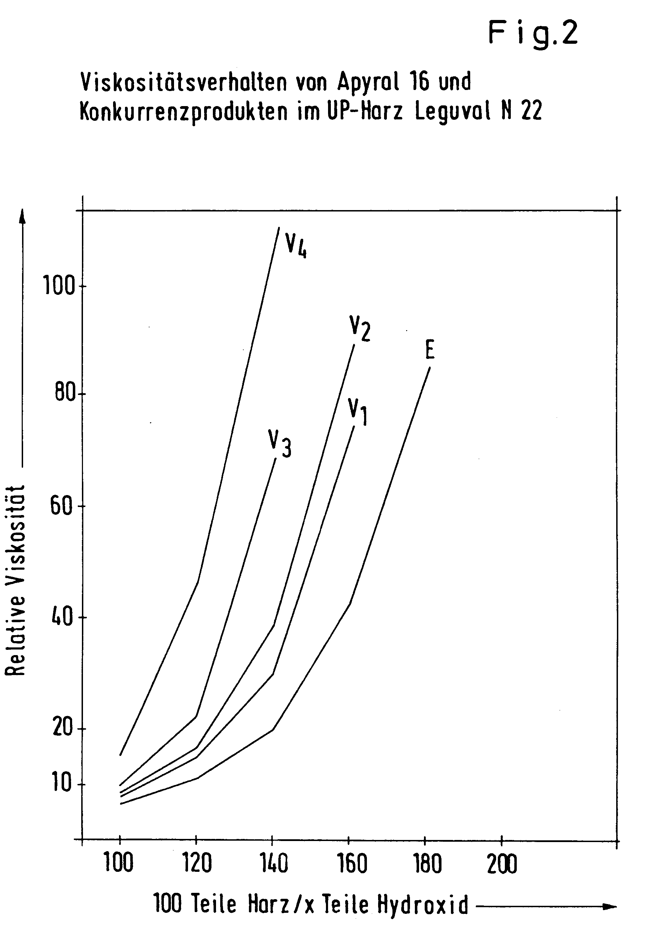

Das Viskositätsverhalten des erfindungsgemäßen Produktes wird in Abb. 2 im Vergleich zu handelsüblichen Hydroxiden V1 bis V4 dargestellt. Aufgetragen ist die relative Viskosität über den Füllgrad in einem ungesättigten Polyesterharz von Typ Leguval N 22, wobei die Meßergebnisse im gefüllten Harz dividiert wurden durch die Eigenviskosität des Harzes.

Je niedriger die normierte Viskosität bei einem bestimmten Füllgrad ist, um so besser läßt sich das gefüllte Harz verarbeiten. Somit ist aus Abb. 2 ersichtlich, daß das Viskositätsverhalten mit dem erfindungsgemäßen Produkt ein Optimum erreicht.

Der Grenzfüllgrad als Übergang von "gerade noch fließfähig" zu "stichfest" wird die Beispiele nach Abb. 2 wie folgt definiert: Die Viskosität des untersuchten Harzes ist mehr als 110 mal größer als die des ungefüllten Harzes. Unter dieser Voraussetzung wird für den Vergleichsversuch V4 der Grenzfüllgrad bei 140 Teilen Hydroxid auf 100 Teile Harz erreicht, während beim erfindungsgemäßen Produkt der Grenzwert erst bei ca. 190 Teilen Hydroxid auf 100 Teilen Harz erreicht wird.

Im folgenden wird das erfindungsgemäße Verfahren zur Herstellung eines gemeinen Hydroxids mit guten Füllstoffeigenschaften beschrieben. Dabei wird eine Schwingmühle eingesetzt (Typ PALLA 20 U, Fa.

KHD) mit folgenden Betriebsparametern:

| Schwingkreis: | 4 - 6 $\mu$m |
|---|---|
| Drehzahl: | 1400 Upm |
| Mahlkörper: | 1/2" Cylpebs aus Keramik |
| Füllgrad der Mahlkörper: | ca. 66 % |
| Durchsatz: | 40 - 60 kg/h Hydroxid. |

Als Aufgabematerial wurde ein Aluminiumhydroxid mit einer mittleren Korngröße von 40 - 60 $\mu$m gewählt, bei dem der Grobanteil über 128 $\mu$m, max. 5 % aufwies. Nach Mahlung wurde ein Aluminiumhydroxid mit einer mittleren Korngröße von 11 um bei einer Kornobergrenze von 60 $\mu$m von max. 0,5 % erhalten.

Tabelle 1

| Kornverteilungen beim erfindungsgemäßen Produkt E und Vergleichsprodukten V 1 - V4 | | | | | | |
|---|---|---|---|---|---|---|
| | Fuller | E | V1 | V2 | V3 | V4 |
| $d_{90}$ ($\mu$m) | 35,6 | 30,9 | 28,1 | 27,3 | 22,6 | 21,7 |
| $d_{50}$ ($\mu$m) | 11 | ca.11 | ca. 11 | ca.11 | ca.11 | 11 |
| $d_{10}$ ($\mu$m) | 0,4 | 1,8 | 2,1 | 2,3 | 2,1 | 4,0 |
| B ( $\mu$m) | 5,31 | 4,22 | 3,85 | 3,71 | 3,30 | 2,66 |

**Patentansprüche**

1. Gemahlenes Aluminiumhydroxid mit einer mittleren korngröße $d_{50}$ von 10 - 15 $\mu$m, vorzugsweise 11 - 14 $\mu$m, dadurch gekennzeichnet, daß die Kornobergrenze bei 63 $\mu$m mit max. 0,5 % begrenzt ist und daß die Breite B der Kornverteilung, gemessen als B = $\sqrt{d_{90}}$ - $\sqrt{d_{10}}$, zwischen 4 - 5 liegt.

2. Verfahren zur Herstellung eines Aluminiumhydroxids mit einer Kornverteilung nach Anspruch 1 für die Einmischung in Duroplaste, wobei übliches nach dem BAYER-Verfahren gewonnenes Aluminiumhydroxid mit einer mittleren Korngröße $d_{50}$ = 40 - 60 $\mu$m mit einem Grobanteil > 125 $\mu$m von max. 5 % gemahlen wird,
dadurch gekennzeichnet,
daß eine Mühle mit Mahlkörpern aus Keramik wie Kugel- oder Trommelmühle, vorzugsweise Schwingmühle eingesetzt wird.

3. Flammgeschützter Kunststoff auf Basis von Duroplasten, enthaltend gemahlenes Aluminiumhydroxid,
dadurch gekennzeichnet,
daß die mittlere Korngröße des Aluminiumhydroxids $d_{50}$ = 10 - 15 $\mu$m beträgt, vorzugsweise $d_{50}$ = 11 - 14 $\mu$m beträgt, die Kornobergrenze bei 63 $\mu$m von max. 0,5 % liegt, wobei die Breite B der Kornverteilung, gemessen als B = $\sqrt{d_{90}}$ - $\sqrt{d_{10}}$, zwischen 4 bis 5 liegt,
und das Mischungsverhältnis von Hydroxid zu Harz bei 160 - 180 : 100 Gewichtsteilen liegt bei einem Grenzfüllgrad - gemessen als Übergang von "gerade noch fließfähig" zu "stichfest" - von 110 mal höherer Viskosität als der des ungefüllten Harzes.

**Claims**

1. Ground aluminum hydroxide with a mean grain size $d_{50}$ of 10 - 15 $\mu$m, preferably 11 - 14 $\mu$m, characterised in
that the upper grain limit of 63 $\mu$m is limited to 0.5% max. and that the width B of grain distribution, measured as B = $\sqrt{d_{90}}$ - $\sqrt{d_{10}}$, ranges between 4 - 5.

2. A process of producing aluminium hydroxide with a grain distribution according to claim 1 for being mixed with duroplastics, in the case of which standard aluminium hydroxide obtained by the BAYER process is ground to achieve a mean grain size $d_{50}$ = 40 - 60 $\mu$m with a coarse grain percentage > 125 $\mu$m of max. 5%,
characterised in
that a mill with ceramic grinding members such as a ball or drum mill, preferably a vibration mill, is used.

3. Flame-protected plastics based on duroplastics, containing ground aluminium hydroxide,
characterised in
that the mean grain size of the aluminium hydroxide $d_{50}$ = 10 - 15 $\mu$m, preferably $d_{50}$ = 11 - 14 $\mu$m, that the upper grain limit is 63 $\mu$m of max. 0.5%, with the width B of grain distribution, measured as B = $\sqrt{d_{90}}$ - $\sqrt{d_{10}}$, ranging between 4 - 5 and that the hydroxide/resin mixing ratio is 160 - 180 : 100 weight percentages, with a limit filling factor, measured as the transition from "only just free-flowing" to "compact", featuring a viscosity which is 110 times higher than that of unfilled resin.

**Revendications**

1. Hydroxyde d'aluminium broyé présentant une granulométrie moyenne $d_{50}$ de 10 - 15 $\mu$m, de préférence de 11 -14 $\mu$m, caractérisé en ce que la limite granulométrique supérieure de l'ordre de 63 $\mu$m est limitée à 0.5 % au maximum, et en ce que l'éventail B de la répartition des grains, déterminé par B = $\sqrt{d_{90}}$ - $\sqrt{d_{10}}$, se situe entre 4 et 5.

2. Procédé pour fabriquer un hydroxyde d'aluminium avec une répartition des grains selon la revendication 1 qui est destiné à être mélangé à des matières plastiques thermodurcissables, sachant qu'on broie l'hydroxyde d'aluminium habituel obtenu conformément au procédé BAYER, qui présente une granulométrie moyenne $d_{50}$ de 40-60 $\mu$m avec une proportion de grains grossiers > 125 $\mu$m de 5 % au maximum, caractérisé en ce qu'on utilise un broyeur comportant des éléments broyeurs en céramique, tels qu'un broyeur à boulets ou un broyeur à tambour, de préférence un broyeur vibrant.

3. Matière plastique ignifuge à base de matières plastiques thermodurcissables et contenant de l'hydroxyde d'aluminium broyé, caractérisé en ce que la granulométrie moyenne de l'hydroxyde d'aluminium $d_{50}$ est de 10 - 15 $\mu$m, de préférence de 11 - 14 $\mu$m, en ce que la limite granulométrique supérieure de l'ordre de 63 $\mu$m est limitée à 0,5 % au maximum, l'éventail B de la répartition des grains, déterminé par B = $\sqrt{d_{90}}$ - $\sqrt{d_{10}}$, situant entre 4 et 5, et le rapport de mélange d'hydroxyde et de résine se situant aux alentours de 160 - 180 : 100 parties en poids pour un taux limite de charges - mesuré en tant que passage de l'état "tout juste encore coulant" à l'état "consistant" - dont la viscosité est 110 fois supérieure à celle de la résine non chargée.

# F i g.1

E ——————
V₁ — — —
V₂ - - - - -
V₃ —·—·—

Vergleich der Kornverteilungen von E mit
Konkurrenzprodukten
V₁-V₃

EP 0 469 257 B1

# Fig.2

Viskositätsverhalten von Apyral 16 und
Konkurrenzprodukten im UP-Harz Leguval N 22